# EUROPEAN PATENT SPECIFICATION

(11) **EP 1 847 872 B1**
(45) Date of publication and mention of the grant of the patent: **29.07.2009**
(21) Application number: 06112835.1
(22) Date of filing: 20.04.2006
(51) Int. Cl.: G03B 11/04

(54) **Mattebox with flag position fixation and tiltable filter unit**
Mattebox mit Flagpositionsfixierung und drehbarer Filtereinheit
Boîtier mat avec fixation en position drapeau et unité de filtre inclinable

(43) Date of publication of application: 24.10.2007
(73) Proprietor: Vocas Systems B.V., 1221 CL Hilversum (NL)
(72) Inventor: Blok, Fred, 1221 CL, Hilversum (NL); Ladru, Bastiaan, 1221 CL, Hilversum (NL)
(74) Representative: van Westenbrugge, Andries

(56) References cited:
- US-A- 5 101 298
- BAS LADRU: "User Manual Century Optics Digital Video Matte Box" 19 May 2003 (2003-05-19), , XP002392027 * pages 7,8,10 *
- ANONYMOUS: "Operation Manual Kamio Model KAM-6" 18 November 2003 (2003-11-18), KINO FLO LIGHTING SYSTEMS , SUN VALLEY , XP002392028 * pages 2,5,6,10 *

## Description

### Field of the invention

The present invention relates to a mattebox for use in combination with a lens (e.g. a photography, video or film lens), the mattebox comprising a mounting arrangement for attaching a flag on a side of the mattebox, wherein the mounting arrangement is arranged to allow the flag to pivot around a longitudinal axis of a mounting rod. Such a mattebox may be used to shield to front surface of the lens from receiving direct intense light, such as sunlight, in order to reduce degradation of the image quality by flare, scattering of light, etc.

### Prior art

A mattebox or camera lens shading device is known from European patent EP-B-1 368 703, and comprises a shell which is mountable to a camera or a camera lens. The mattebox is arranged with filter holders, in which a number of filter plates may be inserted. Such a mattebox is also disclosed in the publication 'User manual Century Optics Digital Video Matte Box', by B. Ladru of 19 May 2003. Such matteboxes are generally used in filming or photography, and may be fitted with a flap, also called French flag, at the top rim of the mattebox, in order to prevent stray light (e.g. sunlight) from falling on the front of the lens. In general the French flag is attached to a rod using screw fasteners, the rod being pivotably attached to the mattebox. Locking of the French flag is done by tightening the rod in an axial direction, using an operator handle which extends from the side of the mattebox. The mattebox may be provided with a French flag which is attached to the mattebox using an accessory shoe thereof. The position of the French flag may be fixed using a friction hinge.

The publication 'Operation Manual Kamio Model KAM-6.' dated 18 November 2003 discloses a mattebox which may be provided with an eyebrow or barn door to prevent reflections in the lens during operation.

Furthermore, American patent publication US-A-5,101,298 discloses a television lens shade. A top shade piece attaches to a (flexible) mounting band and extends outward from above the camera lens, adjustable over a range of angles. Position locking means, in the form of a turn buckle assembly, are used to set an angle between a top mounting section and the top shade piece.

### Summary of the invention

The present invention seeks to provide a mattebox allowing to mount a flag in a simple, effective manner, which also allows a secure and reliable fixation of the flag.

According to the present invention, a mattebox according to claim 1 is provided. This allows to provide a reliable fixation of the flag with only a small clamp body. This arrangement furthermore allows for an easy fixation possibility, and also allows to manufacture the clamp body by cutting pieces of an elongated profile (e.g. an extruded aluminum profile).

In a further embodiment, the mounting rod is attached to the mattebox using a bushing arrangement, and the clamp body is attached to the mattebox using the mounting rod and a ridge on the mattebox. In this embodiment, the clamp body can be easily integrated on the mattebox using as little additional parts as possible.

The ends of the first leg and second leg extend over at least half of the circumference of the mounting rod in a further embodiment, to allow a sufficiently large contact area between the mounting rod and the clamp body to fixate the mounting rod (and attached flag). A tightener arrangement may be provided in the clamp body in a further embodiment for forcing the first leg and second leg towards each other.

In a further embodiment, the mounting rod is provided with a friction enhancing layer, such as a layer of PVC. This layer enhances the friction, and thus the fixation may become more reliable. Also, the layer protects the surfaces of both the mounting rod and the clamp body from excessive wear.

### Short description of drawings

The present invention will be discussed in more detail below, using a number of exemplary embodiments, with reference to the attached drawings, in which
Fig. 1 shows a perspective rear-side view of a mattebox according to an embodiment of the present invention, fitted with a French flag;
Fig. 2 shows a detailed cross sectional view of the clamp body fitted on the mattebox of Fig. 1;
Fig. 3a shows a perspective view of the elements of a filter frame used in a further embodiment of the present invention; and Fig. 3b shows a perspective view of the filter frame in assembled state;
Fig. 4 shows a conceptual drawing of a filter in front of a lens or lens system;
Fig. 5 shows a perspective rear-side view of a mattebox in which a filter unit according to a further embodiment is locatable;
Fig. 6 shows a rear view of the mattebox of Fig. 5; and
Fig. 7 shows a cross sectional view of the mattebox of Fig. 6 along the lines A-A.

### Detailed description of exemplary embodiments

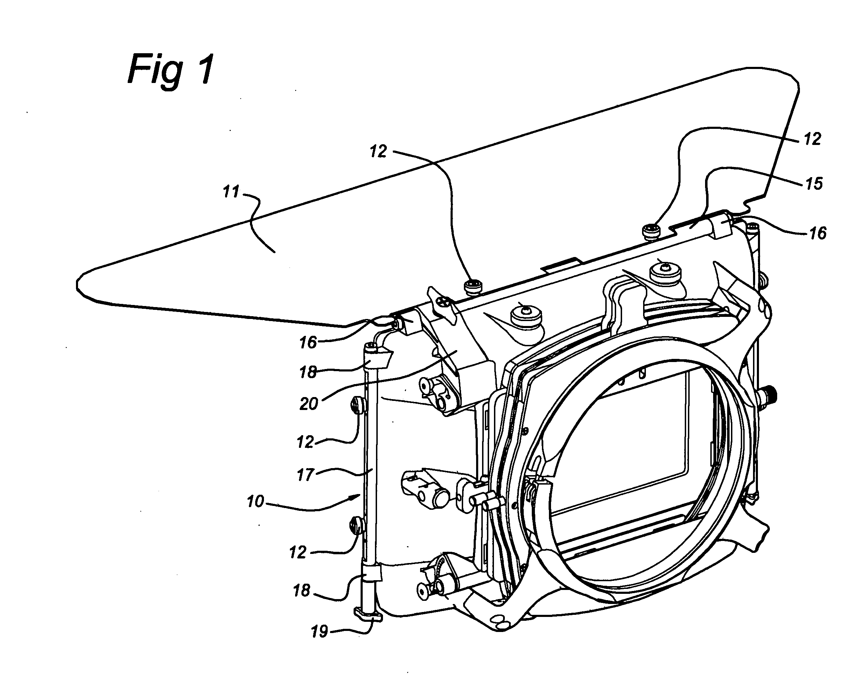

A perspective view of a mattebox 10 according to an embodiment of the present invention is shown in Fig. 1. The mattebox 10 may be attached to a camera or camera lens in various manners, e.g. using a quick lock mounting mechanism, or on a camera rail using a rail support.

A French flag 11 is attached to a rod 15 using fastening screws 12. The rod 15 is attached to the mattebox 10 using bushings 16, which allows the rod 15 to pivot. The rod 15 (and thus attached French flag 11) may be fixed in a defined position using fixation means or clamp body 20.

On the side of the mattebox shown in Fig. 1, a further example of a flag attachment is shown. Again, a rod 17 is pivotably attached to the mattebox 10 using bushings 18, and a flag may be attached to the rod 17 using fastening screws 12. In this case, the rod 17 may be fixed in a defined position using a fixing screw 19, which exerts a force on the rod 17 in axial direction. The frictional forces between rod 17 and bushings 18 then fixate the position of the rod 17. This arrangement has the disadvantage that a fixing screw 19 is needed which extends beyond the mattebox 10 to allow handling thereof. As this fixing screw 19 extends, it is also vulnerable to damaging (bending or even breaking off). Also, the friction force obtainable using this configuration is rather limited, as a result of which the flag may still be moveable, especially when the flag is large or heavy.

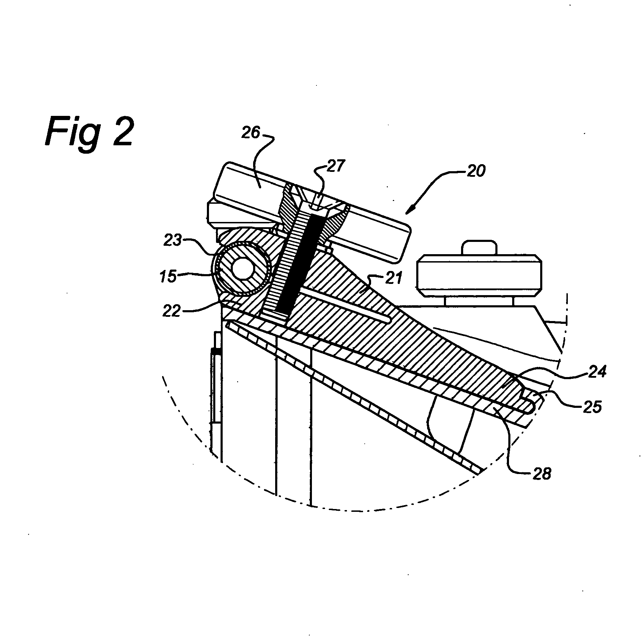

The clamp body 20 according to the embodiment of the present invention does not have these disadvantages. In Fig. 2 a sectional view is shown of the clamp body 20 attached to the mattebox 10. The clamp body 20 is arranged to exert a clamping force on the mounting rod 15 substantially in a tangential direction thereof. This provides a much better fixation of the mounting rod 15 and attached flag 11, as the clamping force can be exerted on a much larger area of the mounting rod 15.

The outer shell of the mattebox 10 is provided with a an extending part or ridge 25 in which an end 24 of the clamp body 20 is held. The other ends of the clamp body 20 are used to attach the clamp body 20 to the mattebox 10 using the mounting rod 15. In the embodiment shown, the clamp body 20 comprises a U-shaped profile with a first leg 22 and a second leg 21 resiliently connected to the first leg 22, the first leg 22 and second leg 21 having ends conformal to the mounting rod 15. This allows to clamp the mounting rod 15 using the clamp body using friction between the mounting rods 15 outer surface and the inner surfaces of the ends of the first leg 22 and second leg 21.

The ends of the first leg 22 and second leg 21 extend over at least half of the circumference of the mounting rod 15, and possibly even three quarters of the circumference. The larger the contact area between the clamp body 20 and the mounting rod 15, the larger the friction force can be. The width of the clamp body 20 may also be varied to enhance the fixation capability of the clamp body 20.

In the embodiment shown in Fig. 1 and 2, a tightener arrangement 26, 27 is provided in the clamp body 20 for forcing the first leg 22 and second leg 21 towards each other. The tightener arrangement in this embodiment comprises a screw 27 and a wing nut 26 fixedly attached to the screw 27. The screw 27 attaches to the first leg 22 e.g. using a screw thread, and passes through a hole in the second leg 21. Of course, other tightener arrangements may be used, in which e.g. the wing nut 26 and screw 27 are replaced by a wing bolt. The wing nut 26 may be dimensioned to be easily usable by a human operator, and still, the positioning of the clamp body 20 allows a very compact build, without any extending parts (such as the fixing screw 19). The chance of damaging the flag fixation means is thus significantly reduced using the present arrangement.

Both the mounting rod 15 and the clamp body 20 may be manufactured from metal using known techniques, such as aluminum to make the matte box 10 as light as possible. To prevent damage to the surfaces of mounting rod 15 and clamp body 20, the mounting rod 15 is provided with a layer 23 at the position of the clamp body 20. This layer 23 may act both as a damage prevention layer and as a friction enhancing layer 23, and is e.g. made of PVC.

Although the above embodiment describes a clamp body 20 provided at the top edge of the mattebox 10, similar arrangements may be provided at the other sides of the mattebox 10. The clamp body 20 may also be used in similar arrangements requiring a flag to be fixed in position, e.g. in lighting equipment.

The mattebox 10 shown in Fig. 1 is also provided with holders for filter frames 30 (three shown in Fig. 1). The filter frames 30 are arranged to accept and hold filter plates (e.g. glass filters). Known filter frames are equipped with a retention mechanism which is operable from the outside of the filter frame to keep the filter in position. The retention mechanism of known systems comprises a large number of parts and requires additional machining of the filter holder frame, and assembly of the various filter frame parts.

According to a further embodiment of the present invention the mattebox is adapted to receive a filter frame 30 in filter holders. The filter frame 30 comprises a filter frame body 31 and a locking mechanism for locking a filter in the filter frame 30, the locking mechanism comprising a sliding body 33 resiliently attached to the filter frame body 31 in a slit allowing movement of the sliding body 33 between a locking position and a mount position, the sliding body 33 being provided with a guidance part 36 extending in a guidance slit 38 provided in the filter frame body 31.

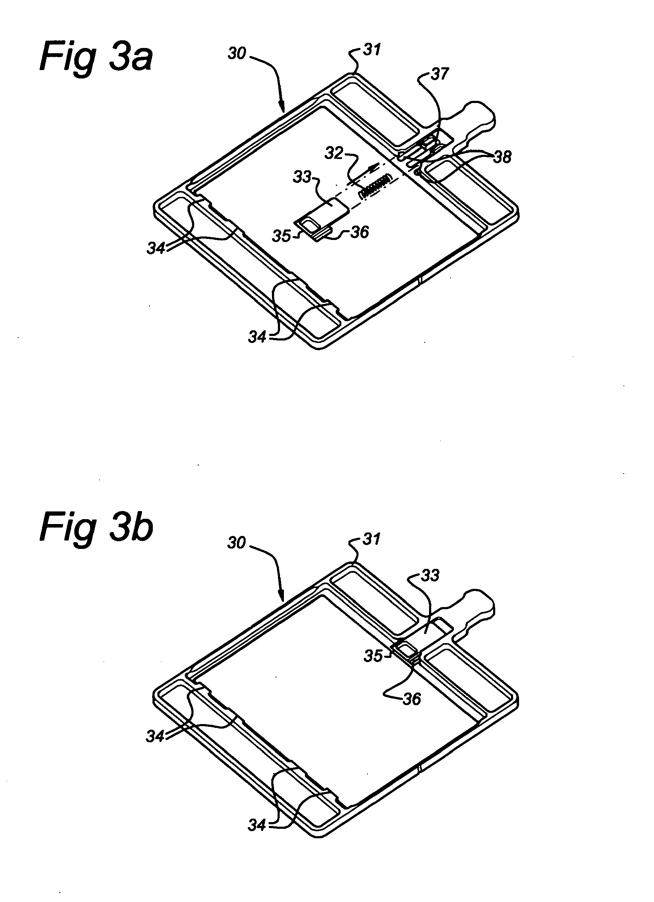

A perspective view of the components of the filter frame 30 are shown in Fig. 3a, and an assembled filter frame 30 is shown in Fig. 3b. The filter frame 30 comprises a filter frame body 31 and a locking mechanism for locking a filter in the filter frame 30. A filter plate may be held in the filter frame body 31 using ridges 34 on one side of the filter frame body 31, and a ridge 35 formed as part of the locking mechanism on the opposite side. The locking mechanism comprising a sliding body 33 resiliently attached to the filter frame body 31 in a slit allowing movement of the sliding body 33 between a locking position and a mount position. The sliding body 33 is provided with a guidance part 36 which, in operation (assembled state) extends in a guidance slit 38 provided in the filter frame body 31. The sliding body 33 may be resiliently arranged in the filter frame body 31 using a spring 32, which may be positioned in a spring slit 37. This embodiment of the filter frame 30 only requires three parts to be made and assembled, and has no extending operation elements, such as the prior art filter frames. Furthermore, in known filter frames, the locking mechanism may still be operable by mistake when the filter frame is in the holder of the mattebox 10. This is prevented in the present filter frame 30, as the operating mechanism (sliding body 33) is positioned at the side face of the filter frame 30 which is hidden when positioned in the mattebox 10.

The filter frame body 31 may be easily produced form a sheet of filter frame material, e.g. by milling the sheet form a first side to provide the entire filter frame body 31 including the open space for the filter plate. From the first side, also a slit for the sliding body 33 may be milled. From a second opposite side of the sheet further milling may be done to provide the guidance slit 38 for a guidance part 36 of the sliding body 33. This is done at the position where the slit for the sliding body is made on the first side, thereby providing the guidance part 38 and an undercut for the sliding body 33 at the same time.

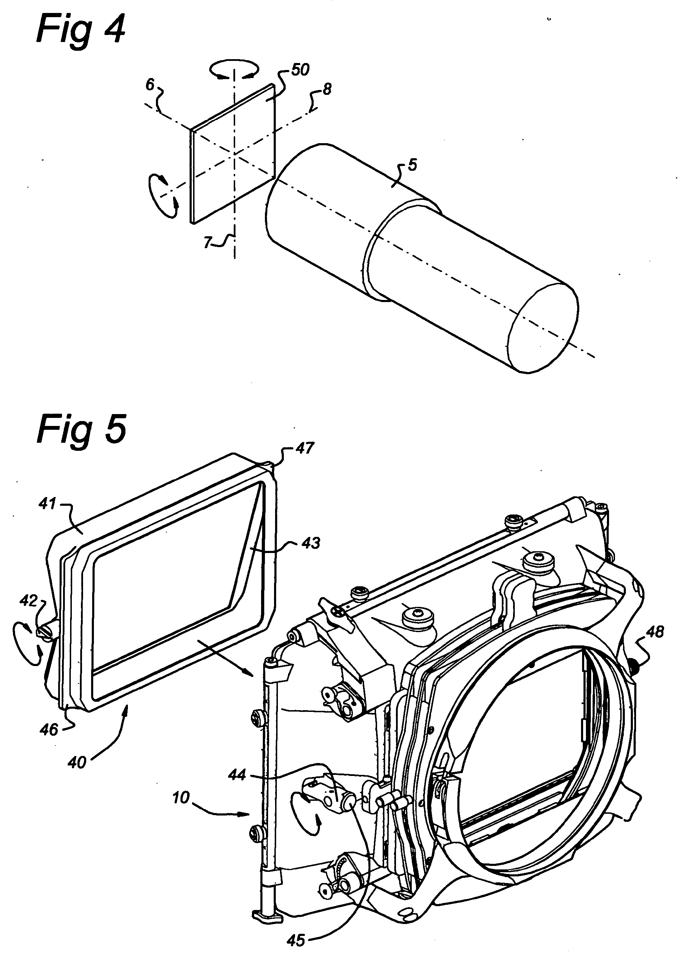

In the mattebox 10 as shown in the embodiment of Fig. 1, a number of filters in filter frames 30 may be positioned. In general the filters comprise glass or glasslike plates, and are positioned parallel to each other, at a certain distance to each other (few mm). When using a camera fitted with a mattebox 10 and filters to shoot a scenery comprising highlights (small spots with higher brightness than rest of scenery), the filters may cause reflections visible in the imagery recorded. A solution to this problem may be provided by tilting one of the filters in a direction perpendicular to an optical axis of the lens to which the mattebox 10 is attached. This solution is schematically shown in Fig. 4, which shows a lens or lens system 5 (in simplified form) having an optical axis 6. A filter plate 50 is usually positioned in front of the lens 5 perpendicular to the optical axis 6 (or in other words, the normal of the filter plate 50 surface is parallel to the optical axis 6). Reflections may be eliminated (or at least reduced to a large extent) by tilting the filter 50 around an axis which is substantially perpendicular to the optical axis 6, e.g. around the vertical axis 7 or around the horizontal axis 8. The best effect is achieved when the normal of the filter plate 50 surface is directed at the high light in the scenery (e.g. the sun).

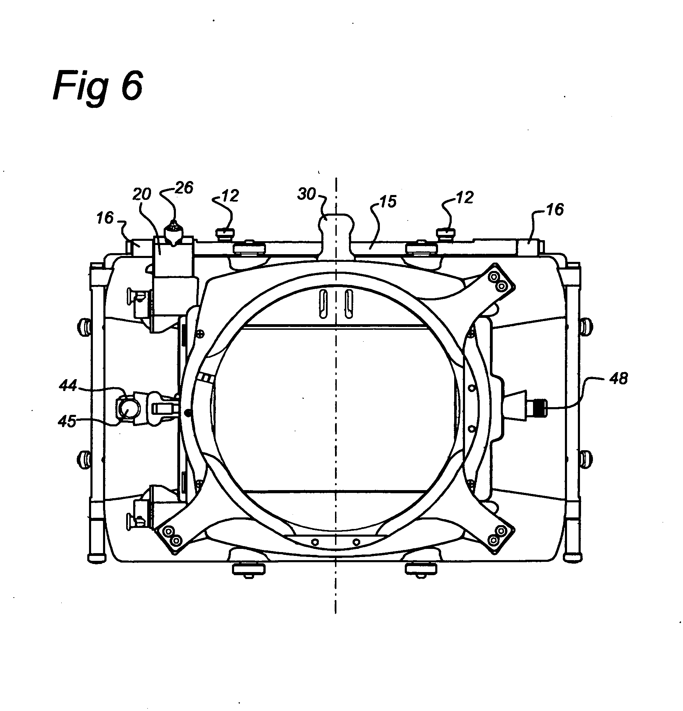

According to a further embodiment of the present invention, the mattebox 10 may be fitted with a special filter unit 40, as shown in the perspective view of Fig. 5. 12. This filter unit 40 is suitable for use with a mattebox, e.g. a mattebox as described above, in which the filter unit 40 comprises a mounting frame 41 and a pivotable filter holder unit 43, in which the filter holder unit 43 is pivotable around an axis substantially perpendicular to an optical axis 6 of the mattebox 10. The filter unit 40, which may be a separate unit or integrated with the mattebox 10, comprises a mounting frame 41 and a pivotable filter holder unit 43, in which the filter holder unit 43 is pivotable around an axis substantially perpendicular to an optical axis 6 of the mattebox. The pivotable motion is indicated near the coupling joint 42, which in assembled position couples to a lever mechanism 44 in the mattebox 10. In the embodiment shown, the coupling joint 42 comprises a V-shaped protrusion, which couples to a V-shaped groove in the lever mechanism 44. The lever mechanism 44 may be provided with a locking mechanism, of which a knob 45 is visible in the perspective view of Fig. 5 (and in the rear view of Fig. 6). In the embodiment described with reference to Fig. 5 and Fig. 6, the filter unit 40 allows a tilt of +/- 15° of the filter holder 43 (and filter 50) around the horizontal axis. This embodiment of the mattebox may e.g. be used in wide screen imaging, in which the filter holder unit 40 is this pivotable around the longest dimension of the wide screen, to allow the largest possible deflection angle.

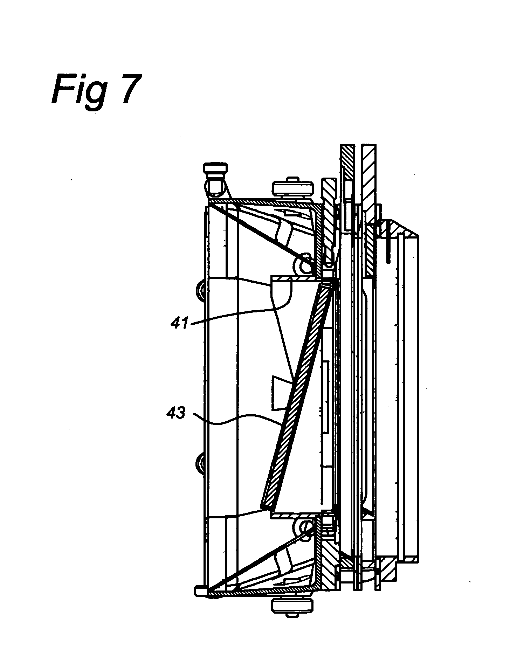

In Fig. 7, a cross sectional view of the mattebox 10 along the lines A-A in Fig. 6 is shown, in which the mounting frame 41 and filter holder 43 are clearly shown.

The lever mechanism 44 of this embodiment allows to operate the tilting filter unit 40 from the backside of the mattebox 10. In a further embodiment, a lever mechanism which extend from the front of the mattebox 10 is provided, at a side of the mattebox 10.

The mounting frame 41 is provided with edges 46, 47, which couple to a coupling mechanism in the front side of the mattebox 10, e.g. using undercuts and a moveable locking mechanism. This allows to put the filter unit 40 in operational position in the mattebox 10, even if the mattebox is already mounted on a camera or camera lens. The operating lever 48 for the locking mechanism is visible in the perspective view of Fig. 5, and is also shown in the rear view of the mattebox in Fig. 6.

## Claims

1. Mattebox for use in combination with a lens, the mattebox (10) comprising a mounting arrangement for attaching a flag (11) attached to a mountry rod (15) on a side of the mattebox (10), wherein the mounting arrangement is arranged to allow the flag (11) to pivot around a longitudinal axis of the mounting rod (15),
the mattebox (10) further comprising a clamp body (20) for fixing the position of the flag (11) relative to the mattebox (10), and the clamp body (20) is arranged to exert a clamping force on the mounting rod (15) substantially in a tangential direction thereof, **characterized in that** the clamp body (20) comprises a U-shaped profile with a first leg (22) and a second leg (21) resiliently connected to the first leg (22), the first leg (22) and second leg (21) having ends conformal to the mounting rod (15).

2. Mattebox according to claim 1, in which the mounting rod (15) is attached to the mattebox (10) using a bushing arrangement (16), and in which the clamp body (20) is attached to the mattebox using the mounting rod (15) and a ridge (25) on the mattebox (10).

3. Mattebox according to claim 1 or 2, in which the ends of the first leg (22) and second leg (21) extend over at least half of the circumference of the mounting rod (15).

4. Mattebox according to claim 1, 2 or 3, in which a tightener arrangement (26, 27) is provided in the clamp body (20) for forcing the first leg (22) and second leg (21) towards each other.

5. Mattebox according to any one of claims 1-4, in which the mounting rod (15) is provided with a friction enhancing layer (23).

## Patentansprüche

1. Mattebox für die Verwendung in Kombination mit einer Linse, wobei die Mattebox (10) eine Anbringungsanordnung zum Anbringen eines Flügels (11), der an einer Befestigungsstange (15) angebracht ist, auf einer Seite der Mattebox enthält und die Anbringungsanordnung so beschaffen ist, dass sie es dem Flügel (11) gestattet, um eine Längsachse der Befestigungsstange (15) zu schwenken, wobei die Mattebox (10) weiterhin einen Klemmkörper (20) enthält, um die Stellung des Flügels (11) relativ zur Mattebox (10) zu fixieren, und der Klemmkörper (20) derart beschaffen ist, dass er eine Klemmkraft auf die Befestigungsstange (15) im wesentl i-chen in einer tangentialen Richtung derselben ausübt, **dadurch gekennzeichnet, dass** der Klemmkörper (20) ein U-förmiges Profil mit einem ersten Schenkel (22) und einem zweiten Schenkel (21) enthält, der mit dem ersten Schenkel (22) federnd verbunden ist, wobei der erste Schenkel (22) und der zweite Schenkel (21) Enden aufweisen, die mit der Befestigungsstange (15) konform sind.

2. Mattebox nach Anspruch 1, bei der die Befestigungsstange (15) an der Mattebox (10) mit Hilfe einer Buchsenanordnung (16) angebracht ist und bei der der Klemmkörper (20) an der Mattebox mit Hilfe der Befestigungsstange (15) und einem Vorsprung (25) an der Mattebox (10) angebracht ist.

3. Mattebox nach Anspruch 1 oder 2, bei der sich die Enden des ersten Schenkels (22) und des zweiten Schenkels (21) über wenigstens die Hälfte des Umfangs der Befestigungsstange (15) erstrecken.

4. Mattebox nach Anspruch 1, 2 oder 3, bei der eine Spannanordnung (26, 27) im Klemmkörper (20) vorgesehen ist, um den ersten Schenkel (22) und den zweiten Schenkel (21) zusammenzudrücken.

5. Mattebox nach einem der Ansprüche 1 bis 4, bei der die Befestigungsstange mit einer reibungsverstärkenden Schicht (23) versehen ist.

## Revendications

1. Porte-cache destiné à être utilisé en association avec une lentille, le porte-cache (10) comprenant un agencement de montage pour fixer un écran pare-lumière (11) fixé à une tige de montage (15) sur un côté du porte-cache (10), dans lequel l'agencement de montage est agencé pour permettre à l'écran pare-lumière (11) de pivoter autour d'un axe longitudinal de la tige de montage (15),
le porte-cache (10) comprenant en outre un corps de serrage (20) pour fixer la position de l'écran pare-lumière (11) par rapport au porte-cache (10), et le corps de serrage (20) est agencé pour exercer une force de serrage sur la tige de montage (15) dans une direction sensiblement tangentielle de celle-ci,
**caractérisé en ce que** le corps de serrage (20) comprend un profil en forme de U avec un premier segment (22) et un second segment (21) relié de façon élastique au premier segment (22), le premier segment (22) et le second segment (21) présentant des extrémités conformes à la tige de montage (15).

2. Porte-cache selon la revendication 1, dans lequel la tige de montage (15) est fixée au porte-cache (10) à l'aide d'un agencement de douille (16), et dans lequel le corps de serrage (20) est fixé au porte-cache à l'aide de la tige de montage (15) et d'une saillie (25) sur le porte-cache (10).

3. Porte-cache selon la revendication 1 ou 2, dans lequel les extrémités du premier segment (22) et du second segment (21) s'étendent sur au moins la moitié de la circonférence de la tige de montage (15).

4. Porte-cache selon la revendication 1, 2 ou 3, dans lequel un agencement de tendeur (26, 27) est prévu dans le corps de serrage (20) pour forcer le premier segment (22) et le second segment (21) l'un vers l'autre.

5. Porte-cache selon l'une quelconque des revendications 1 à 4, dans lequel la tige de montage (15) est pourvue d'une couche d'amélioration de frottement (23).
